# EUROPÄISCHE PATENTANMELDUNG

(11) **EP 1 029 433 A2**
(43) Veröffentlichungstag der Anmeldung: **23.08.2000**
(21) Anmeldenummer: 00102091.6
(22) Anmeldetag: 03.02.2000
(51) Int. Cl.: A01C 7/04

(54) **Verfahren zur Ermittlung der Einstellposition des Abstreiferelementes und/oder der Art der Vereinzelungsscheibe einer Einzelkornsämaschine**

(30) Priorität: 16.02.1999 DE 19906429
(71) Anmelder: Amazonen-Werke H. Dreyer GmbH & Co. KG, 49205 Hasbergen (DE)
(72) Erfinder: Kemper, Martin, 49205 Hasenberg (DE)

(57) **Zusammenfassung**

Verfahren zur Ermittlung der für eine auszubringende Saatgutsorte erforderlichen Einstellposition des Abstreiferelementes und/oder der Art der Vereinzelungsscheibe einer Einzelkornsämaschine, in folgenden Schritten:
1. es werden zunächst im Großversuch mit einem Einzelkornsäaggregat für verschiedene Saatgutsorten die erforderliche Art der Vereinzelungsscheiben und/oder die erforderlichen Einstellpositionen des Abstreiferelementes ermittelt und auf einem Datenträger festgehalten;
2. es wird gleichzeitig mit mengenmäßig wesentlich kleineren Saatgutproben wenigstens ein saatgutspezifischer Wert wie Kornform, Kaliber, Tausendkorngewicht, Beize etc. ermittelt und
3. es wird dann der jeweilige saatgutspezifische Wert dem im parallelen Großversuch ermittelten Einstellposition des Abstreiferelementes und/oder der ermittelten Vereinzelungsscheibe zugeordnet und auf einem Datenträger festgehalten;
4. es wird dann bei Vorlage einer hinsichtlich ihres Vereinzelungsverhalten unbekannten Saatgutsorte anhand von Proben entsprechend Schritt 2, der jeweiligen Sorte zunächst ein saatgutspeziflscher Wert, entsprechend Schritt 2, für diese Sorte ermittelt und
5. es wird dann für den unter 4. ermittelten saatgutspezifischen Wert der zugehörende, auf dem Datenträger festgehaltene Einstellwert für das Abstreiferelement und/oder die Art der Vereinzelungsscheibe entnommen.

## Beschreibung

Die Erfindung betrifft ein Verfahren zur Ermittlung der für eine auszubringende Saatgutsorte erforderlichen Einstellposition des Abstreiferelementes und/oder der Art der Vereinzelungsscheibe einer Einzelkornsämaschine.

In der Landwirtschaft werden mittels Einzelkornsämaschinen verschiedene Düngersorten unterschiedlicher Größen und Formen ausgebracht. Um eine korrekte Vereinzelung der Saatkörner der verschiedenen Saatgutsorten zu gewährleisten, ist es erforderlich, daß die Abstreifer, die den Vereinzelungsscheiben zugeordnet sind, korrekt eingestellt sind, damit jeweils nur ein Saatkorn an der vorgesehenen Stelle der Vereinzelungsscheibe anhaften bleibt. Weiterhin ist es erforderlich, daß die jeweils optimale Vereinzelungsscheibe eingesetzt wird.

Derzeit muß der Landwirt die Einstellung der Abstreiferelemente bei Einzelkornsämaschinen in einem Probedurchgang in aufwendiger Weise und zeitraubender Weise einstellen. Auf die Angaben in den Bedienungsanleitungen kann er sich nicht immer verlassen, denn von Jahr zu Jahr variieren die unterschiedlichen Parameter der einzelnen Saatkörner teilweise relativ stark voneinander.

Der Erfindung liegt daher die Aufgabe zugrunde, auf einfache Weise ein Verfahren zu schaffen, anhand welchem dem Landwirt oder Bediener der Maschine auf einfachste Weise ausreichend klare Informationen gegeben werden, wie die Einzelkornsämaschine für das Ausbringen einer bestimmten Saatgutsorte einzustellen ist.

Diese Aufgabe wird erfindungsgemäß durch die Kennzeichen der Verfahrensansprüche 1 oder 2 gelöst.

Hierbei ist nach Erfindung vorgesehen, daß die ermittelten Werte in Tabellen oder im Rechner eingesetzt oder eingespeichert werden, und so die Einstellwerte zum Einstellen des Düngerstreuers ermittelt werden. Anhand der ermittelten Werte kann so auf einfachste Weise beispielsweise über einen einfachen Rechenvorgang oder über Tabellen oder über einen Rechner die Einstellung der Einzelkornsämaschine ermittelt werden, wenn zunächst die saatgutspezifischen Werte gefunden worden sind. Hierbei werden die ermittelten saatgutspezifischen Werte mit zuvor erfaßten Vergleichswerten verglichen und aus diesem Vergleichsergebnis erfolgt eine Zuordnung zu den Einstellwerten der Einzelkornsämaschine. Hierbei ist es somit nach dem erfindungsgemäßen Verfahren möglich, mit sehr geringen Saatgutmengen, beispielsweise Bruchteilen von einem Kilogramm sicher die Einstellung der Einzelkornsämaschine für diese bestimmte Saatgutsorte zu bestimmen.

Weitere Einzelheiten der Erfindung sind den übrigen Unteransprüchen, der Beispielsbeschreibung und den Zeichnungen zu entnehmen. Hierbei zeigen
- Fig.1: die Erfassung und Zuordnung der Maschineneinstellung zu den saatgutspezifischen Werten in einem Computer in einem schematischen Schaubild und
- Fig.2: die schematische Darstellung der Ermittlung der Maschineneinstellung über die saatapezifischen Werte und einem Computer in einem schematischen Schaubild.

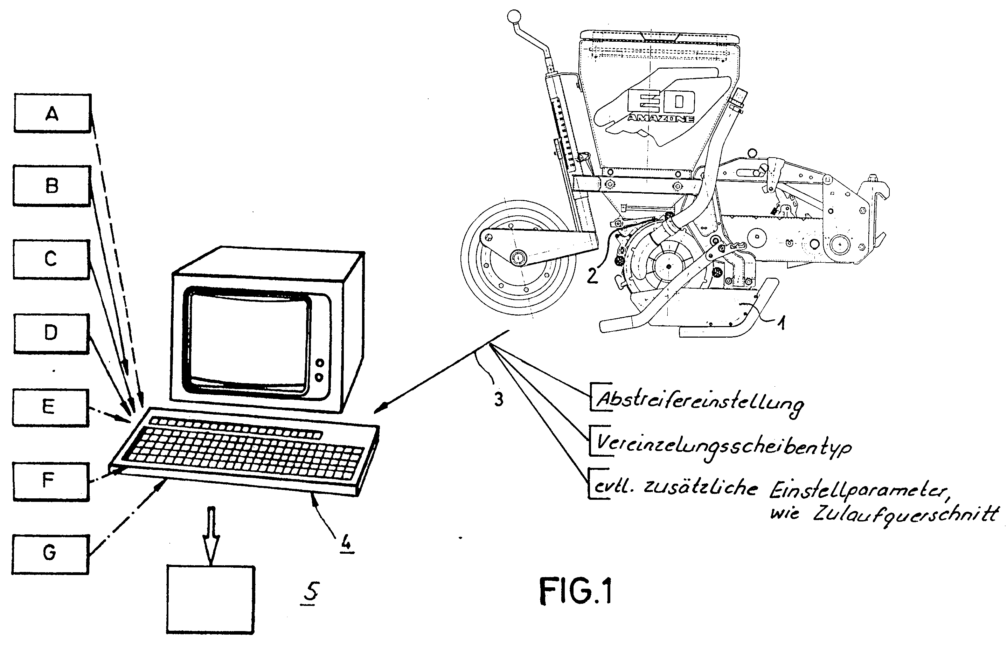

Die Fig. 1 zeigt in einem Schaubild die Erstellung der erforderlichen Daten für die Datenbank. Auf dem durch das Einzelkornsäaggregat sinnbildlich 1 dargestellten Prüfstand werden die Einstelldaten des Einzelkornsäaggregates 1 für jede Düngersorte und Fahrgeschwindigkeit und Kornfrequenz ermittelt. Hierbei werden die Fahrgeschwindigkeit, die Körneranzahl pro Hektar, die Reihenweite und die sich aus Fahrgeschwindigkeit, Körner pro Hektar und Reihenweite ergebene Kornfrequenz sowie der herrschende Unterdruck, die Art der Vereinzelungsscheibe und die Einstellung des Abstreiferelementes 2 für eine gute Kornvereinzelung ermittelt. Diese Daten werden wie der Pfeil 3 symbolisiert, in den Rechner 4 eingegeben und in seinem Speicher abgelegt. Zur Ermittlung dieser Einstellwerte der Einzelkornsäaggregate einer Einzelkornsämaschine für die verschiedenen Arbeitsbreiten, sind relativ große Mengen Saatgut erforderlich.

Desweiteren werden in dem Rechner 4 die saatgutspezifischen Werte für die verschiedenen Saatgutsorten mittels geeigneter Mittel ermitteltet und ebenfalls in dem Speicher des Rechners 4 abgelegt. Wie durch die Kästchen mit den Bezeichnungen A, B, C, D, E, F, G und den Pfeilen symbolisiert werden, werden diese Werte in dem Speicher des Rechners abgelegt. Hierbei stellt das Symbol A beispielsweise den charakterischen Wert für die Kornform, die beispielsweise durch eine Siebanalyse ermittelt wird, dar. Das Symbol B steht beispielsweise für das Tausendkorngewicht. Das Symbol C kann für die an dem Saatgut angebrachte Beizmittelsorte stehen. Weitere Werte, die durch die übrigen Kästchen symbolisiert werden, können, wenn sie entscheidend für die Vereinzelungsqualität sind, ebenfalls eingegeben werden. Hierbei kann die Kornfrequenz, die eine Funktion der Fahrgeschwindigkeit, der Körnerzahl pro Fläche und der Reihenweite ist, oder die Kornfrequenz bestimmenden Werte mit eingespeichert werden. Mittels des Rechners 3 wird also in der Datenbank 5 eine Zuordnung zwischen den auf dem Einzelkornprüfstand 1 ermittelten Maschineneinstellungen für eine bestimmte Saatgutsorte zu den saatgutspezifischen Düngereigenschaften geschaffen.

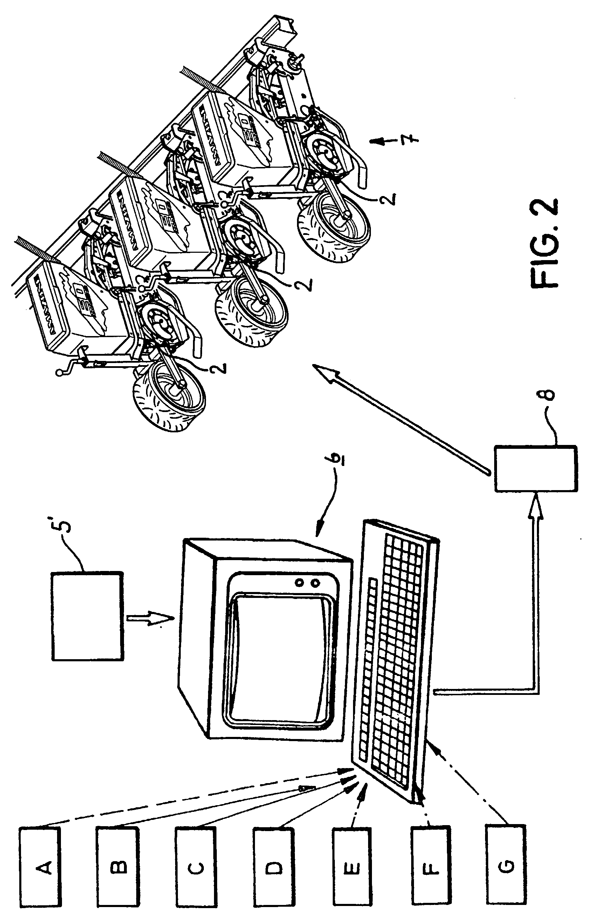

Wie das Schaubild gemäß Fig.2 zeigt, ist es über die saatgutspezifischen Saatguteigenschaften gemäß den Symbolen A-G oder einigen von ihnen, über die Datenbank 5' und einem Rechner 6 ohne weiteres möglich, für die Maschineneinstellung der Einzelkornsämaschine 7 unter Berücksichtigung der Kornfrequenz, die sich aus Fahrgeschwindigkeit, Körner pro Hektar und Reihenweite ergibt, und dem Unterdruck auf die Einstelldaten der Maschine 7, wie Abstreifereinsteflung und Vereinzelungsscheibentyp und andere Einstellparameter, wie beispielsweise Zulaufquerschnitt zu der Vereinzelungascheibe von dem Vorratsbehälter für das Ausbringen einer speziellen Saatgutsorte zu schließen. Diese Einstellparameter können auf dem Display des Rechners 6 angezeigt oder in einem Protokoll 8 ausgedruckt werden. Ebenfalls kann der erforderliche Unterdruckwert mit abgelegt werden. Diese Daten werden je Saatgutsorte, wie durch den Pfeil 4 symbolisiert ist, über den Computer 4 in der Datenbank 5 abgelegt.

## Patentansprüche

1. Verfahren zur Ermittlung der für eine auszubringende Saatgutsorte erforderlichen Einstellposition des Abstreiferelementes und/oder der Art der Vereinzelungsscheibe einer Einzelkornsämaschine (7), gekennzeichnet durch die folgenden Schritte:
1. es werden zunächst im Großversuch mit einem Einzelkornsäaggregat (1) für verschiedene Saatgutsorten die erforderliche Art der Vereinzelungsscheiben und/oder die erforderlichen Einstellpositionen des Abstreiferelementes (2) ermittelt und auf einem Datenträger (4, 5) festgehalten;
2. es wird gleichzeitig mit mengenmäßig wesentlich kleineren Saatgutproben wenigstens ein saatgutspezifischer Wert wie Kornform, Kaliber, Tausendkorngewicht, Beize etc. ermittelt und
3. es wird dann der jeweilige saatgutspezifische Wert dem im parallelen Großversuch ermittelten Einstellposition des Abstreiferelementes und/oder der ermittelten Vereinzelungsscheibe zugeordnet und auf einem Datenträger (4, 5) festgehalten;
4. es wird dann bei Vorlage einer hinsichtlich ihres Vereinzelungsverhalten unbekannten Saatgutsorte anhand von Proben entsprechend Schritt 2, der jeweiligen Sorte zunächst ein saatgutspezifischer Wert, entsprechend Schritt 2, für diese Sorte ermittelt und
5. es wird dann für den unter 4. ermittelten saatgutspezifischen Wert der zugehörende, auf dem Datenträger (4, 5) festgehaltene Einstellwert für das Abstreiferelement (2) und/oder die Art der Vereinzelungsscheibe entnommen.

2. Verfahren zur Ermittlung der für eine auszubringende Saatgutsorte erforderlichen Einsteilposition des Abstreiferelementes und/oder der Art der Vereinzelungsscheibe einer Einzelkornsämaschine (7), gekennzeichnet durch die folgenden Schritte:
1. es werden zunächst im Großversuch mit einem Einzelkornsäaggregat (1) für verschiedene Saatgutsorten die erforderliche Art der Vereinzelungsscheiben und/oder die erforderlichen Einstellpositionen des Abstreiferelementes (2) ermittelt und auf einem Datenträger (4, 5) festgehalten;
2. es wird gleichzeitig mit mengenmäßig wesentlich kleineren Saatgutproben wenigstens ein saatgutspezifischer Wert mittels eines Testgerätes ermittelt und
3. es wird dann der jeweils saatgutspezifische Wert dem im parallelen Großversuch ermittelten Einstellposition des Abstreiferelementes und/oder der ermittelten Vereinzelungsscheibe zugeordnet und auf einem Datenträger (4, 5) festgehalten,
4. es wird dann bei Vorlage einer hinsichtlich ihres Vereinzelungsverhaltens unbekannten Saatgutsorte anhand von Proben entsprechend Schritt 2, der jeweiligen Sorte mit dem Testgerät der saatgutspezifische Wert, entsprechend Schritt 2, für diese Sorte ermittelt und
5. es wird dann für den unter 4. ermittelten saatgutspezifischen Wert der zugehörende, auf dem Datenträger (4, 5) festgehaltene Einstellwert für das Abstreiferelement (2) und/oder die Art der Vereinzelungsscheibe entnommen.

3. Verfahren nach Anspruch 2, dadurch gekennzeichnet, daß das Testgerät als mobiles Testgerät ausgebildet ist und drei Siebstufen aufweist.
